(19) Europäisches Patentamt
European Patent Office
Office européen des brevets

(11) **EP 2 739 573 B1**

(12) **EUROPEAN PATENT SPECIFICATION**

(45) Date of publication and mention
of the grant of the patent:
**16.11.2016 Bulletin 2016/46**

(21) Application number: **12740117.2**

(22) Date of filing: **18.07.2012**

(51) Int Cl.:
*C02F 1/469* (2006.01)      *C02F 1/00* (2006.01)

(86) International application number:
**PCT/EP2012/064100**

(87) International publication number:
**WO 2013/017412 (07.02.2013 Gazette 2013/06)**

(54) **A DEVICE AND PROCESS FOR IMPROVED RECOVERY OF DEIONISED WATER**

VORRICHTUNG UND VERFAHREN FÜR VERBESSERTE RÜCKGEWINNUNG VON ENTIONISIERTEM WASSER

DISPOSITIF ET PROCÉDÉ POUR LA RÉCUPÉRATION AMÉLIORÉE D'EAU DÉIONISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2011 IN MM22112011**

(43) Date of publication of application:
**11.06.2014 Bulletin 2014/24**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, EC4Y 0DY (GB)**
Designated Contracting States:
**CY GB IE MT**

(72) Inventors:
• **ALENCHERRY, Tinto Johnichan**
**Bangalore 560 066 (IN)**
• **RAJANARAYANA, Venkataraghavan**
**Bangalore 560 066 (IN)**

(74) Representative: **van den Brom, Coenraad Richard**
**Unilever Patent Group**
**Olivier van Noortlaan 120**
**3133 AT Vlaardingen (NL)**

(56) References cited:
**US-A1- 2002 167 782    US-A1- 2007 284 313**

**Description**

**FIELD OF THE INVENTION**

The present invention relates to a process and a device for improved recovery of deionised water that is purified using the method of capacitive deionization for removal of dissolved salts from water.

**BACKGROUND OF THE INVENTION**

A large population of people in the world live in countries where there is a severe shortage of hygienic potable water. A high percentage of these people live in rural and far flung areas where there are few, if any, municipal drinking water treatment plants. People have to depend directly on ground water sources like wells, ponds and rivers.

The water from these sources can contain high levels of dissolved salts of the order of 500 to 3000 ppm which makes the water unsuitable for drinking purposes. Water with salt levels of the order of 500 to 1500 ppm has an unpleasant taste and water with salt levels beyond 1500 ppm is termed generally as 'brackish water' and is relatively unpalatable. Salt levels of 50 to 300 ppm tastes good and is generally accepted by all as good drinking water.

Capacitive deionization is a technology that is useful in salt removal. In this technology water containing salts is allowed to flow through a pair of oppositely charged electrodes and ions are electrosorbed on the surface of the electrodes thereby removing the salt in treated water. This technology has been shown to effectively remove salt from water at significantly lower energy consumption and with significantly higher recovery.

US6127474 A (Andelman, 2000), US7110242 B (C and T Company, 2006), US6022436 A (Koslow Technologies Corporation, 2000), US2005/0042513 A1 (Curran et al) and US2006/0114643 A1 (Maxwell Technologies Inc) discloses electrode compositions for use in capacitive deionization technology and they disclose compositions with activated carbon along with a binder e.g. a fibrillated polymer and conductive carbon black in various proportions and with various particle sizes.

WO09077276 A1 (Unilever, 2009) discloses an electrode composition for capacitive deionization for removal of dissolved salts from water and to a process for preparing the same and the use of such systems in water purification devices. It discloses an electrode for capacitive deionization of water comprising activated carbon, thermoplastic polymeric binder and conductive carbon black.

During the capacitive deionization process, part of the feed water is collected as pure water suitable for drinking with low levels of the total dissolved salts and another part of the water is discarded as waste as the salt levels are higher than the above mentioned level. So the recovery of pure water in the process is low.

Attempts have been made to improve the recovery rate of capacitive deioniser.

One such attempt was made in US2002167782 A1 (Andelman, 2002) which describes a flow-through capacitor for deionising or decontaminating a fluid. The application discloses the use of charge barrier; that is a layer of material permeable or semipermeable, and capable of holding an electric charge, placed adjacent to an electrode such that this charge barrier compensates for the pore volume losses caused by adsorption and expulsion of pore volume ions. This provides for a capacitor with improved ionic and energy efficiency. However, in this application, a system to recover or recycle the waste water stream is not disclosed.

US2007/0284313 A1 (Lee et. al.) discloses a water purification system using electrosorption. This application teaches a submerged type, electrosorption based water purification apparatus and method, capable of enhancing the desalination efficiency and recovery rate and minimizes power consumption by efficient removal of the air or gas adhering to electrodes. The application discloses an apparatus with one or more of the electrosorption-based reactors arranged in tandem or parallel array and submerged in the inflow water storage/purification water bath. The application teaches the recycling of a portion of the regeneration solution into the inflow water during the regeneration cycle. As this system only recycles the regeneration solution it will not really improve the efficiency of the electrode in any way.

**SUMMARY OF THE INVENTION**

Surprisingly, it has now been found that a process by which the waste water produced during the purification of water by capacitive deionization can be recycled to improve the total recovery and enhance the life of the electrodes of the capacitive deionisation cell.

It is thus an object of the present invention to provide a process for improving recovery of deionised water from feed water stream.

It is another object of the present invention to provide a device for improved recovery of deionised water from feed water stream.

It is yet another object of the present invention to enhance the life of the electrodes of a capacitive deionisation cell.

It is a further object of the present invention to reduce wastage of water.

Accordingly in a first aspect, disclosed is a process for improved recovery of deionised water from a feed water stream, comprising the steps of:

**(i)** delivering the feed water stream into a capacitive deionisation cell;
**(ii)** measuring the salt concentration of the water exiting the capacitive deionisation cell;
**(iii)** collecting the water exiting the cell, when the salt concentration is lower than a predetermined lower set point, to prepare purified water or rejecting the water exiting the cell when the salt concentration is higher than a predetermined upper set point;

wherein the water exiting the cell is recycled with the feed water stream when the salt concentration of the water exiting the cell is between the lower set point and the upper set point.

In accordance with a second aspect, disclosed is a device for improved recovery of deionised water from feed water, comprising:

**(i)** means to input feed water into a capacitive deionization cell;
**(ii)** a power supply capable of applying pre-programmed timed cycles of positive potentials, negative potentials and shorting the cell;
**(iii)** a meter for measuring the salt concentration of the water exiting the cell;
**(iv)** a solenoid valve downstream of the meter;
**(v)** an electronic processor;

characterized in that the valve is a four way valve and electronic processor is programmed to receive the salt concentration value of the water exiting the cell from said meter, and actuate the valve to separate the water into one of three streams where the first stream is for collection of purified water when the salt concentration is below a predetermined lower set point, a second stream for rejection of water when the salt concentration is above a predetermined upper set point and a third stream for recycling of water back into the input feed water stream when the salt concentration is between said lower set point and said upper set point.

These and other aspects, features and advantages will become apparent to those of ordinary skill in the art from a reading of the following detailed description and the appended claims. The word "comprising" is intended to mean "including" but not necessarily "consisting of" or "composed of." In other words, the listed steps or options need not be exhaustive. It is noted that the examples/ figures given in the description below are intended to clarify the invention and are not intended to limit the invention to those examples per se.

## BRIEF DESCRIPTION OF THE FIGURES

Figure 1 is a schematic block diagram of a recycling capacitive deionisation cell based water deionisation system in accordance with the present invention.

Figure 2 is a schematic representation of the four way solenoid valve in accordance with the present invention.

## DETAILED DESCRIPTION OF THE INVENTION

Water deionisation method

The invention provides for a process for deionising feed water stream comprising the step of delivering the feed water stream into a capacitive deionisation cell; measuring the salt concentration of the water exiting the capacitive deionisation cell and either preparing purified water or rejecting the water or recycling the water exiting the capacitive deionisation cell.

Water deionisation device

Disclosed is a device for improved recovery of deionised water from feed water, comprising:

**(i)** means to input feed water into a capacitive deionization cell;
**(ii)** a power supply capable of applying pre-programmed timed cycles of positive potentials, negative potentials and shorting the cell;

(iii) a meter for measuring the salt concentration of the water exiting the cell;

(iv) a solenoid valve downstream of the meter;

(v) an electronic processor;

characterized in that the valve is a four way valve and electronic processor is programmed to receive the salt concentration value of the water exiting the cell from said meter, and actuate the valve to separate the water into one of three streams where the first stream is for collection of purified water when the salt concentration is below a predetermined lower set point, a second stream for rejection of water when the salt concentration is above a predetermined upper set point and a third stream for recycling of water back into the input feed water stream when the salt concentration is between said lower set point and said upper set point.

## Means to input feed water

The device according to the invention includes a means to input feed water into a capacitive deionisation cell. The means to input feed water preferably includes a reservoir or an inline source of feed water and a pump.

The feed water stored in a reservoir may be fed into the capacitive deionisation cell or the capacitive deionisation cell may be connected to an inline source. The pump preferably delivers the feed water from the reservoir or inline source into the capacitive deionisation cell.

The pump delivers the feed water at a flow rate of preferably 1 to 1500 ml/minute and more preferably at flow rate of 10 to 300 ml/minute.

## Capacitive deionisation cell

The device includes a capacitive deionisation cell. The capacitive deionisation cell preferably includes a pair of electrodes, with electrodes in a pair placed parallelly and connected to a positive and a negative potential. An enclosure preferably surrounds the capacitive deionisation cell and provides for water to flow in and out of the cell. The enclosure preferably also provides for and makes connections externally to the electrodes in the cell.

## Electrode

The electrode preferably includes a mixture of activated carbon, thermoplastic binder and conductive carbon black that is moulded onto a graphite sheet substrate through a heat treatment process. Preferably one electrode of the pair of electrodes is connected to the positive potential and the other of the pair of electrodes is connected to a negative potential of a power supply. Preferably a plurality of electrode pair may be arranged inside a cell.

## Activated carbon

Activated carbon is preferably selected from one or more of bituminous coal, coconut shell, wood and petroleum tar. Surface area of the activated carbon preferably exceeds 500 $m^2$/g, more preferably exceeds 1000 $m^2$/g. Preferably the activated carbon has size uniformity co-efficient of less than 2, more preferably less than 1.5; preferably a carbon tetrachloride number exceeding 50%, more preferably exceeding 60%.

The activated carbon preferably has an iodine number greater than 800, more preferably greater than 1000. The activated carbon has a particle size in the range of 75 to 300 microns, preferably from 100 to 250 microns.

## Thermoplastic Binder

The term thermoplastic binder used in the electrode is preferably a binder having melt flow rate (MFR) less than 5 g/ 10 minutes, more preferably less than 2 g/ 10 minutes, further more preferably less than 1 g/ 10 minutes. Bulk density of the binder is preferably less than or equal to 0.6 $g/cm^3$, more preferably less than or equal to 0.5 $g/cm^3$, and further more preferably less than or equal to 0.25 $g/cm^3$. The melt-flow rate (MFR) is measured using ASTM D 1238 (ISO 1133) test. The test measures the flow of a molten polymer through an extrusion plastometer under specific temperature and load conditions.

The extrusion plastometer consists of a vertical cylinder with a small die of 2 mm at the bottom and a removable piston at the top. A charge of material is placed in the cylinder and preheated for several minutes. The piston is placed on top of the molten polymer and its weight forces the polymer through the die and on to a collecting plate. The time interval for the test ranges from 15 seconds to 15 minutes in order to accommodate the different viscosities of plastics. Temperatures used are 190, 220, 250 and 300 °C (428, 482 and 572 °F). Loads used are 1.2, 5, 10 and 15 kg. Preferably the tests are done at 190°C at 15 kg load. The amount of polymer collected after a specific interval is weighed and normalized to the number of grams that would have been extruded in 10 minutes. Melt flow rate is expressed in grams per reference time.

The binder is preferably a thermoplastic polymer having the low MFR values above described. Suitable examples include ultra high molecular weight polymer preferably polyethylene, polypropylene and combinations thereof, which have these low MFR values.

The molecular weight is preferably in the range of $10^6$ to $10^9$ g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

The thermoplastic binder is preferably not a fibrillated polymer e. g. polytetrafluoroethylene (PTFE).

The particle size of the thermoplastic binder is preferably in the range of 20 to 60 microns, preferably greater than 40 microns. The thermoplastic binder is preferably present in 8 to 30%, more preferably in 10 to 30%, further more preferably 12 to 28% by weight of the electrode.

The ratio of activated carbon to binder is preferably in the range of 1:1 to 20:1, more preferably in the range of 1:1 to 10:1 parts by weight.

Conductive carbon black (CCB)

The carbon black is a form of elemental carbon. Most carbon black is produced by the oil furnace process from liquid, aromatic hydrocarbons. In selecting carbon black for electrode, key factors to consider are: Total surface area and mesopore surface area, structure and surface oxidation.

The conductive carbon black used in the electrode of the invention preferably has total surface area higher than 500m$^2$/g.

The conductive carbon black has mesopore area greater than 100m$^2$/g and more preferably in the range of 100 to 1000m$^2$/g.

The structure of the carbon black is characterized by Oil Absorption Number (OAN). Commercially available carbon black has OAN in the range from 45 to 400 cc/100 grams of black. The conductive carbon black preferably has Oil Absorption Number (OAN) greater than 100 cc/ 100 g, preferably in the range of 100 to 400 cc/100 g, more preferably in the range of 250 to 400 cc/100 g. The conductive carbon black has low chemisorbed oxygen on their surfaces.

Suitable grades of carbon black may be procured from TIMCAL Graphite 5 Carbon (Grades: Ensaco 250G, Ensaco 350) or from Cabot Corporation (Grades: Regal, Black Pearl 2000, Vulcan), or from EVONOVIK (Grade: PRINTEX XE-2), or from AKZO NOBEL (Ketjen Black).

Power Supply

The power supply is preferably a programmable DC power supply system for supplying DC voltage with voltage range 0V to 5V, 100 W and for applying pre-programmed timed cycles of positive potentials, negative potentials and shorting the cell.

A positive potential is applied across the electrodes of the capacitive deionisation cell during the purification cycle and a negative potential is applied during the regeneration cycle. Two shorting states (S1) and (S2) are applied one before (S1) and one after (S2) applying the negative potential in regeneration cycle. The voltage applied across the electrodes of the capacitive deionisation cell during the purification cycle is preferably from 0.1 to 5 V more preferably from 0.8 to 3.5 V and still more preferably from 1.0 to 2.5 V. The negative voltage applied across the electrodes during the regeneration cycle is preferably from -0.1 to -5 V more preferably from -0.8 to -3.5 V and still more preferably from -1.0 to -2.5 V.

The duration of positive potential is preferably from 60 to 1200 seconds. The duration of negative potential is preferably from 10 to 300 seconds. The duration of the shorting state (S1) before the regeneration cycle is preferably from 2 to 60 seconds and for the shorting state (S2) after the regeneration cycle is preferably from 5 to 1500 seconds.

Meter

The device according to the invention includes a meter for measuring the salt concentration of the water exiting the cell. The salt concentration is preferably measured by using a conductivity meter. A first conductivity meter is preferably situated before the capacitive deionisation cell and measures the salt concentration of the feed water stream. A second conductivity meter is preferably situated after the capacitive deionisation cell and measures the salt concentration of the output water stream from the capacitive deionisation cell.

The conductivity meter is preferably connected to an electronic processor. The electronic processor receives the electric signal from the conductivity meter.

The electronic processor converts the electric signal from the conductivity meter to Total Dissolved Solids (TDS) concentration value.

The conductivity is preferably measured at regular intervals of 1 second controlled by the electronic processor.

Solenoid Valve

The device according to the invention includes a solenoid valve downstream of the meter; the solenoid valve is a four way valve. The solenoid valve separates the water water into one of three streams where the first stream is for collection of purified water when the salt concentration is below a predetermined lower set point, a second stream for rejection of water when the salt concentration is above a predetermined upper set point and a third stream for recycling of water back into the input feed water stream when the salt concentration is between said lower set point and said upper set point.

The solenoid valve preferably has an inlet port for receiving water from the second conductivity meter, an output reflux water port for recycling the third stream into the feed water stream, an output waste water port for rejecting the second stream and an output pure water port for collecting the first to prepare the purified water.

The opening and closing of the relevant ports of the solenoid valve is controlled by the electronic processor.

The electronic processor opens the output reflux water port of the solenoid valve when the output feed water stream from capacitive deionisation cell has a TDS concentration value between the upper set point and the lower set point. The electronic processor opens the output waste water port when the output feed water stream from capacitive deionisation cell has a TDS concentration higher than the upper set point. The electronic processor opens the output pure water port when the output feed water stream from capacitive deionisation cell has a TDS concentration below than the lower set point. The above output valves are opened while keeping the other two output valves closed.

Electronic processor

The device according to the invention includes an electronic processor. The electronic actuates the solenoid valve to separate the water into one of the three streams. The electronic processor is preferably connected with the first conductivity meter, second conductivity meter, the solenoid valve and the power supply.

The electronic processor is pre-programmed with an upper set point and a lower set point for the total dissolved solid concentration value.

The upper set point is preferably higher than 500 ppm and preferably lower than 1500 ppm. The upper set point is preferably not higher than the salt concentration of the feed water stream.

The lower set point is preferably lower than 300 ppm. More preferably lower than 200 ppm. The lower set point is preferably higher than 100 ppm.

The electronic processor controls the opening of the specific port of the solenoid valve based on the measured input and output TDS concentration value and the pre-determined upper and lower set points of the Total dissolved solids (TDS) concentration.

The invention will now be exemplified with the following nonlimiting figures.

**DETAILED DESCRIPTION OF THE FIGURES**

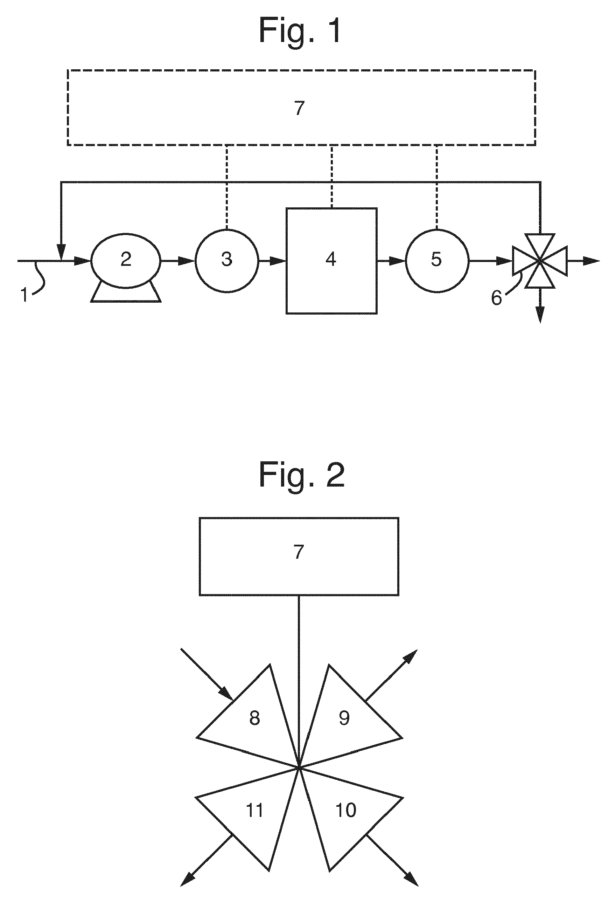

Figure 1 is a schematic block diagram of a recycling capacitive deionisation cell based water deionisation system in accordance with the present invention. Feed water (1) of known ion concentration determined by a first conductivity meter (3) situated before a capacitive deionisation cell (4) is pumped by a pump (2) from the reservoir/inline source of feed water through the capacitive deionization cell (4) having a negative electrode to absorb cations and a positive electrode to absorb anions (not shown in this figure). The ion concentration of the output water exiting the capacitive deionisation cell is determined by a second conductivity meter (5) situated between the capacitive deionisation cell (4) and a four way solenoid valve (6). An electronic processor (7) receives the electric signal from the first (3) and second (5) conductivity meter and converts this signal into a TDS concentration value. The electronic processor (7) is pre-programmed with the pre-determined upper set point and lower set point of TDS concentration value. The electronic processor compares the measured TDS concentrations of the water exiting the second conductivity meter (5) with the pre-programmed levels and controls the opening and closing of the ports of the four way solenoid valve (6). Figure 2 is a schematic representation of the four way solenoid valve in accordance with the present invention. The output feed water stream from the capacitive deionisation cell with a measured ion concentration value enters the four way valve through the input port (8). When the TDS concentration value of the water entering the input port (8) is higher than the predetermined upper set point, the electronic processor (7) opens the output waste water port (10) of the solenoid valve. When the TDS concentration of the water entering the input port (8) is below the predetermined lower set point, the electronic processor (7) sends a signal to open the output pure water port (11) of the solenoid valve.

When the ion concentration of the water entering the input port (8) is between the predetermined lower set point and the pre-determined upper set point the electronic processor (7) sends a signal to open the output reflux water port (9) of the solenoid valve.

## EXAMPLES

Example 1

A device for improved recovery of deionised water according to the present invention as shown in Figure 1 was fabricated and used to determine the recovery of water. The electrode of the capacitive deionisation cell was made by mixing powder activated carbon, high density polyethylene and a conductive carbon black (Ensaco 350G from TIMCAL) in a ratio of 7:2:1 and moulded on a graphite substrate through a heat treatment process. A pair of circular electrodes (15 cm diameter), were placed inside an enclosure with a provision for water to be fed through the electrodes and potential applied to it from the power supply. This formed the deionisation cell.

The deionisation cell was connected to DC power supply system for supplying DC voltage across the positive and negative electrode. A positive potential of 3.2 Volts for 10 minutes was applied across the electrodes during the purification cycle, two shorting cycle for 5 minutes and a negative potential of 3.2 Volts for 2 minutes during the regeneration cycle was given. The feed water stream from the reservoir was fed into the capacitive deionisation cell by a peristaltic pump at a flow rate of 10 ml/min. The salt concentration of the feed water stream was measured by the first conductivity meter. The total dissolved solids concentration (TDS) value of the feed water stream was 600 ppm. The feed water stream entered the capacitive deionisation cell radially and exited the deionisation cell from the centre of the top electrode.

The electronic processor was programmed to a pre-determined lower set point for the TDS concentration value at 200 ppm and an upper set point of TDS concentration value at 600 ppm.

In Example A during the purification cycle, the electronic processor was pre-programmed to open the output waste water port when the TDS concentration value of the water exiting the capacitive deionisation cell was above 200 ppm and to open the output pure water port when the TDS concentration value of the water leaving the capacitive deionisation cell was below 200ppm. The output reflux water port was closed during the entire cycle.

Example B was similar to the Example A except that during the purification cycle, the electronic processor was pre-programmed to open the output reflux water port when the TDS concentration value of the water exiting the capacitive deionisation cell was between 200ppm and 600ppm. The output pure water port was opened when the TDS concentration value of the water exiting the capacitive deionisation cell was below 200ppm and the output waste water port was opened when the TDS concentration value was above 600ppm.

The recovery at the end of a complete cycle was calculated using the following equation:

```
Recovery% = (volume of purified water/ volume of feed water) X
100
```

The data on recovery% are provided in Table 1.

Table 1

| Example | Recovery % 1st cycle | Recovery % 20th cycle | Recovery % 30th cycle | Recovery % 37th cycle | Average recovery % for 37 cycles |
|---------|---------------------|----------------------|----------------------|----------------------|----------------------------------|
| A | 39.3 | 30 | 0 | 0 | 18.6 |
| B | 40.6 | 45 | 35 | 37 | 39.5 |

This set of examples clearly shows that deionising water using capacitive deionisation cell according to the present invention (Example B) gives better recovery when compared with the comparative Example A.

Table 2

| Example | Number of cycles during which recovery >0 % | Total duration of the cycles with recovery > 0% (in hours) |
| --- | --- | --- |
| A | 31 cycles | 8.8 hours |
| B | >37 cycles | >10.5 hours |

Table 2 shows that deionising water using the capacitive deionisation cell according to the present invention (Example B) provides longer life to the electrodes when compared to comparative Example A.

**Claims**

1.  A device for improved recovery of deionised water from feed water stream comprising:

    (i) means to input feed water stream into a capacitive deionization cell;
    (ii) a power supply capable of applying pre-programmed timed cycles of positive potentials, negative potentials and shorting the cell;
    (iii) a meter for measuring the salt concentration of the water exiting the cell;
    (iv) a solenoid valve downstream of the meter;
    (v) an electronic processor;
    **characterized in that** the valve is a four way valve and electronic processor is programmed to receive the salt concentration value of the water exiting the cell from said meter and actuate the valve to separate the water into one of three streams where the first stream is for collection of purified water when the salt concentration is below a predetermined lower set point, a second stream for rejection of water when the salt concentration is above a predetermined upper set point and a third stream for recycling of water back into the input feed water stream when the salt concentration is between said lower set point and said upper set point.

2.  A device as claimed in claim 1 wherein said upper set point is not higher than the salt concentration of the feed water stream.

3.  A device as claimed in claim 1 or 2 wherein the upper set point is higher than 500 ppm.

4.  A device as claimed in any one of the preceding claims wherein the upper set point is lower than 1500 ppm.

5.  A device as claimed in any one of the preceding claims wherein the lower set point is lower than 300 ppm.

6.  A device as claimed in any one of the preceding claims wherein the lower set point is higher than 100 ppm.

7.  A device as claimed in any one of the preceding claims wherein said meter is a conductivity meter.

**Patentansprüche**

1.  Vorrichtung zur verbesserten Rückgewinnung von deionisiertem Wasser aus einem Speisewasserstrom, wobei die Vorrichtung Folgendes umfasst:

    (i) Mittel zum Einleiten eines Speisewasserstoms in eine kapazitive Deionisierungszelle;
    (ii) eine Leistungsquelle, die zuvor programmierte zeitlich festgelegte Zyklen von positiven Potentialen, negativen Potentialen und einen Kurzschluss an die Zelle anlegen kann;
    (iii) ein Messgerät zum Messen der Salzkonzentration des Wassers, das aus der Zelle austritt;
    (iv) ein Magnetventil stromabwärts des Messgeräts;
    (v) einen elektronischen Prozessor;
    **dadurch gekennzeichnet, dass** das Ventil ein Vierwegeventil ist und der elektronische Prozessor programmiert ist, den Salzkonzentrationswert des Wassers, das aus der Zelle austritt, von dem Messgerät zu erhalten und das Ventil zu betätigen, um das Wasser in einen von drei Strömen zu trennen, wobei der erste Strom zum Sammeln von gereinigtem Wasser dient, wenn die Salzkonzentration unter einem zuvor festgelegten unteren Sollwert liegt, ein zweiter Strom zum Zurückweisen von Wasser dient, wenn die Salzkonzentration über einem zuvor festgelegten oberen Sollwert liegt, und ein dritter Strom zum Zurückführen von Wasser zurück in den eingeleiteten Speisewasserstrom dient, wenn die Salzkonzentration zwischen dem unteren Sollwert und dem oberen Sollwert liegt.

2. Vorrichtung nach Anspruch 1, wobei der obere Sollwert nicht höher als die Salzkonzentration des Speisewasserstroms ist.

3. Vorrichtung nach Anspruch 1 oder 2, wobei der obere Sollwert höher als 500 ppm ist.

4. Vorrichtung nach einem der vorhergehenden Ansprüche, wobei der obere Sollwert niedriger als 1500 ppm ist.

5. Vorrichtung nach einem der vorhergehenden Ansprüche, wobei der untere Sollwert niedriger als 300 ppm ist.

6. Vorrichtung nach einem der vorhergehenden Ansprüche, wobei der untere Sollwert höher als 100 ppm ist.

7. Vorrichtung nach einem der vorhergehenden Ansprüche, wobei das Messgerät ein Leitfähigkeitsmessgerät ist.

**Revendications**

1. Dispositif pour une récupération améliorée d'eau désionisée à partir d'un courant d'alimentation d'eau comprenant :

(i) un moyen pour introduire un courant d'alimentation d'eau dans une cellule de désionisation capacitive ;
(ii) une alimentation en courant capable d'appliquer des cycles chronométrés pré-programmés de potentiels positifs, de potentiels négatifs et de court-circuiter la cellule ;
(iii) un dispositif de mesure pour mesurer la concentration en sel de l'eau sortant de la cellule ;
(iv) une électrovanne en aval du dispositif de mesure ;
(v) un dispositif de traitement électronique ;
**caractérisé en ce que** la vanne est une vanne quatre voies et un processeur électronique est programmé pour recevoir la valeur de concentration en sel de l'eau sortant de la cellule à partir dudit dispositif de mesure et actionner la vanne pour séparer l'eau en de un à trois courants où le premier courant est destiné au recueil d'eau purifiée lorsque la concentration en sel est inférieure à un point fixé inférieur prédéterminé, un second courant destiné au rejet d'eau lorsque la concentration en sel est supérieure à un point fixé supérieur prédéterminé et un troisième courant destiné au recyclage d'eau dans le courant d'alimentation d'eau d'entrée lorsque la concentration en sel se trouve entre ledit point fixé inférieur et ledit point fixé supérieur.

2. Dispositif selon la revendication 1, dans lequel ledit point fixé supérieur n'est pas supérieur à la concentration en sel du courant d'alimentation d'eau.

3. Dispositif selon la revendication 1 ou 2, dans lequel le point fixé supérieur est supérieur à 500 ppm.

4. Dispositif selon l'une quelconque des revendications précédentes, dans lequel le point fixé supérieur est inférieur à 1 500 ppm.

5. Dispositif selon l'une quelconque des revendications précédentes, dans lequel le point fixé inférieur est inférieur à 300 ppm.

6. Dispositif selon l'une quelconque des revendications précédentes, dans lequel le point fixé inférieur est supérieur à 100 ppm.

7. Dispositif selon l'une quelconque des revendications précédentes, dans lequel ledit dispositif de mesure est un dispositif de mesure de conductivité.

# Fig. 1

# Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6127474 A, Andelman
- US 7110242 B
- US 2006 B
- US 6022436 A
- US 20050042513 A1, Curran
- US 20060114643 A1
- WO 09077276 A1, Unilever
- US 2002167782 A1, Andelman
- US 20070284313 A1, Lee